# EUROPEAN PATENT APPLICATION

(11) **EP 4 339 619 A1**
(43) Date of publication of application: **20.03.2024**
(21) Application number: 22807138.7
(22) Date of filing: 10.03.2022
(51) Int. Cl.: G01N 35/04

(54) **AUTOMATIC ANALYSIS DEVICE**

(30) Priority: 10.05.2021 JP 2021079967
(71) Applicant: HITACHI HIGH-TECH CORPORATION, Tokyo 105-6409 (JP)
(72) Inventor: MATSUO Sumiaki, Tokyo 105-6409 (JP); MATSUOKA Shinya, Tokyo 105-6409 (JP)
(74) Representative: MERH-IP Matias Erny Reichl Hoffmann Patentanwälte PartG mbB
(86) International application number: PCT/JP2022/010485
(87) International publication number: WO 2022/239431

(57) **Abstract**

To provide an automatic analyzer capable of preventing stacking of used reaction containers more easily than in the related art while achieving space saving.

An automatic analyzer 1 includes: a plurality of reaction containers 14 each configured to hold a reaction liquid; a reaction container tray lifting mechanism 21B configured to convey a reaction container tray 7 that holds the reaction containers 14 before use; and a reaction container disposal unit 26 to which the used reaction container 14 is to be disposed of, and thereaction container disposal unit 26 includes a coupling portion configured to be in contact with the reaction container tray lifting mechanism 21B and configured to convert an operation of the reaction container tray lifting mechanism 21B into an exciting force exerted on the reaction container disposal unit 26.

## Description

### Technical Field

The present invention relates to an automatic analyzer for conducting qualitative/quantitative analysis on a component of a biological sample such as blood and urine.

### Background Art

As an example of automatic analyzers capable of evening an accumulation of used reaction containers while maintaining highly reliable analysis, Patent Literature 1 discloses an automatic analyzer that includes: a reaction container disposal unit into which reaction containers after undergoing measurement are disposed of; a reaction container transfer mechanism that transfers the reaction containers from a reaction container holding unit to the reaction container disposal unit to dispose of the reaction containers into the reaction container disposal unit; and a control unit, in which the control unit controls operation of the reaction container transfer mechanism such that the reaction containers are not continuously disposed of in a predetermined position in the reaction container disposal unit.

### Citation List

### Patent Literature

Patent Literature 1: WO2017/047240

### Summary of Invention

### Technical Problem

As apparatus for analyzing a target component contained in a sample, an automatic analyzer is widely known which measures the amount of light of transmitted light or scattered light of a single wavelength or a plurality of wavelengths obtained by applying light from a light source to a reaction liquid which is a mixture of a reagent and a sample to be analyzed.

The automatic analyzers include: apparatus for biochemical analysis used in qualitative, quantitative analysis on a target component in a biological sample such as in the area of biochemical test or hematological test and the like; apparatus for blood clotting analysis for measuring a clotting function of blood as a sample; and the like.

In such automatic analyzers, the reaction containers in which reaction occurs between a sample and a reagent are sometimes disposed of after one use in order to prevent the effect on the analysis results due to unintended mixing between samples. For use of single-use reaction containers, the used containers are required to be collected and discarded.

Here, where a free fall is used to collect the used reaction containers and/or the like in the disposal unit, the reaction containers are stacked on a specific place in the disposal unit. A disposal hole is often designed to be smaller than an opening of the disposal unit in order to ensure a larger space in the apparatus design surface. Because of this, there is a trend for the reaction containers to be unevenly stacked directly below the disposal hole.

In this manner, where the reaction containers are unevenly stacked within the disposal unit, when a user removes the disposal unit, the stacked reaction containers are likely to slip out of the disposal unit. Also, due to a residue of a sample remaining in the reaction container, if an operator gathers the reaction containers, this may cause risks of causing secondary infection, and the like. Further, uneven stacking may incur a risk of blocking the disposal hole.

In Patent Literature 1, as technologies for preventing the reaction containers and/or the like from being stacked in such a specific place, the technologies to displace the discarding position, provide a plurality of disposal holes, and the like are disclosed. However, it has been determined that due to apparatus layout constraints, there are room for further reduction in component count and more space savings.

It is an object of the present invention to provide an automatic analyzer capable of maintaining the space savings while more easily inhibiting stacking of the used reaction containers than conventional analyzers.

### Solution to Problem

The present invention includes a plurality of solutions to the problems, and one example thereof is that an automatic analyzer includes: a plurality of reaction containers each configured to hold a reaction liquid; a reaction container tray lifting mechanism configured to convey a reaction container tray that holds the reaction containers before use; and a reaction container disposal unit to which the used reaction container is to be disposed of. The reaction container disposal unit include a coupling portion configured to be able to contact the reaction container tray lifting mechanism and configured to convert an operation of the reaction container tray lifting mechanism into an exciting force exerted on the reaction container disposal unit.

### Advantageous Effects of Invention

According to the present invention, stacking of the used reaction containers is able to be inhibited more easily than conventional analyzers, while the space savings may be maintained. These and other problems, configurations, and advantageous effects will be apparent from the following description of embodiments.

### Brief Description of Drawings

[FIG. 1] FIG. 1 is a diagram schematically showing an overall configuration of an automatic analyzer according to a first embodiment of the invention.
[FIG. 2] FIG. 2 is a diagram schematically showing a cross section including a reaction container disposal unit in the automatic analyzer according to the first embodiment.
[FIG. 3] FIG. 3 is a diagram schematically showing a reaction container tray lifting mechanism and the reaction container disposal unit of the automatic analyzer according to the first embodiment.
[FIG. 4] FIG. 4 is a top view showing a structure of a coupling portion on a reaction container disposal unit side in the automatic analyzer according to the first embodiment.
[FIG. 5] FIG. 5 is a side view showing a structure of the coupling portion of the automatic analyzer according to the first embodiment.
[FIG. 6] FIG. 6 is a top view showing a structure of a coupling portion on a reaction container disposal unit side in an automatic analyzer according to a second embodiment of the invention.
[FIG. 7] FIG. 7 is a side view showing the structure of the coupling portion of the automatic analyzer according to the second embodiment of the invention.

### Description of Embodiments

Embodiments of an automatic analyzer according to the present invention will be described below with reference to the accompanying drawings. It is noted that, in the drawings used herein, the same or corresponding elements are designated by the same or similar signs and repeated descriptions of the elements may be omitted in some cases.

### [First Embodiment]

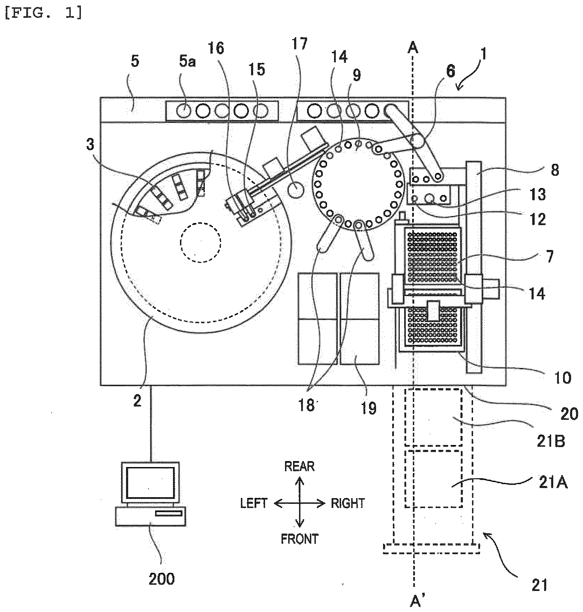

A first embodiment of the automatic analyzer according to the present invention will be described with reference to Fig. 1 to Fig. 5.

Fig. 1 is a plan view of the,automatic analyzer including a reagent disk (hereinafter sometimes referred to as a "reagent container holder" or a "drum").

Throughout the following description, up, down, left, right, front and rear directions are based on the up, down, left, right, front and rear directions shown in Fig. 1.

Inside an automatic analyzer 1 according to the embodiment illustrated in Fig. 1, a plurality of reagent containers (hereinafter sometimes referred to as "reagent containers", "reagent bottles" or simply "bottles") is placed along the inside of the outer peripheral wall of a cylindrical reagent disk 2 which is supported rotatably about the vertical axis, and the automatic analyzer 1 has a function to use a dispensing pipette-to aspirate a predetermined amount of predetermined reagent from each reagent bottle 3, and then to supply the aspirated reagent into a biological sample, such as blood and urine, dispensed into a reaction container, for analysis.

Initially, a conveying path for samples to be analyzed is described.

A sample 5a to be analyzed is moved within the automatic analyzer 1 by a sample conveying mechanism 5, such as a conveyor belt, a rack handler or the like, and is conveyed to and dispensed by a sample dispensing mechanism 6 that includes a dispensing pipette for dispensing samples.

A plurality of reaction containers is placed on a reaction container tray 7, which then is supplied into the automatic analyzer 1.

The automatic analyzer 1 includes reaction container tray lifting mechanisms 21A, 21B that are mounted within a drawer 21 which is supported to be able to move horizontally from a closed position to a full open position via a front surface opening 20 formed in the front surface, a reaction container tray 7 (referred also to as a "holding member") or a plurality of reaction container trays 7 being able to be placed in the drawer 21. At the full open position of the drawer 21, after the reaction container tray 7 is placed on the reaction container tray lifting mechanism 21A, the drawer 21 is pushed rearward to be closed, whereby the reaction container tray 7 may be supplied to the automatic analyzer 1 via the front surface opening 20. The reaction container tray 7 supplied to the automatic analyzer 1 is exposed through the upper surface opening 10 toward a reaction container transfer mechanism 8. In the drawer 21, a reaction container disposal unit 26 which will be described later is also placed.

The reaction container 14 is grasped one by one from the reaction container tray 7 by the reaction container transfer mechanism 8, and then is lifted up to move to an incubator 9 (referred sometimes to as a "culture disk").

In order to achieve such movement, the reaction container transfer mechanism 8 is configured to be able to move in directions of an X axis (left-right directions), of a Y axis (front-rear directions) and of a Z axis (up-down directions), and is configured to be movable, as its moving range, in a range above a reaction container disposal opening 12, a reaction liquid stirring mechanism 13, the reaction container tray 7 and part of the incubator 9.

The disk-shaped incubator 9 axially supported rotatably around a vertical central axis is configured to lock a plurality of reaction containers 14 on the circumference near the outer periphery, so that rotating the incubator 9 may move each of the reaction containers 14 to a predetermined position.

Then, the sample dispensing mechanism 6 moves to an area above a sample to aspirate the sample, and then moves to an area above a reaction container 14 on the incubator 9 to discharge the sample into the reaction container 14. After that, the sample dispensing mechanism 6 cleans a nozzle of the dispensing pipette using a not-shown cleaning mechanism. If a replaceable tip, rather than the nozzle, is used, the tip may be replaced by a not-shown replacing mechanism.

Subsequently, a conveying path for a reagent to be added to the sample in the reaction container 14 is described.

A reagent disk 2 is formed in a cylindrical shape axially supported rotatably around a vertical central axis and also the inside thereof is hollowed out. The reagent disk 2 has slots formed therein to hold a plurality of reagent bottles 3 in a radial fashion along an outer peripheral wall of the inner hollow. Rotating the reagent disk 2 causes each reagent bottle 3 to move to a predetermined position on the circumference. It is noted that some of the reagent bottles 3 contain a reagent including many magnetic particles for agitation. For controlling to maintain the reagent bottles 3 at constant temperature, the reagent disk 2 may have a thermal insulation function..

The reagent dispensing pipette 15 is configured movably such that it can move to a predetermined position after aspirating a reagent from the reagent bottle 3. Initially, after moving to an area above a predetermined type of reagent on the reagent disk 2 and then aspirating a predetermined amount of reagent, the reagent dispensing pipette 15 moves an area above a predetermined reaction container 14 on the incubator 9 and then discharges the reagent into the reaction container 14.

Above the reagent disk 2, a reagent stirring mechanism 16 is placed. In the stirring mechanism 16 is mounted with a magnetic particle stirring arm (also called a "stirrer") which is ratable around a vertical axis .The magnetic particle stirring arm moves to an area above the reagent bottle 3 containing the reagent with magnetic particles to be stirred. Then, for example, a paddle-shaped or helical-shaped magnetic particle stirring mechanism mounted at a lower end of the magnetic particle stirring arm is moved down into the reagent, and the magnetic particle stirring mechanism is rotated in order to stir the magnetic particle solution. For preventing natural sedimentation of the magnetic particles in the solution, the magnetic particle stirring arm stirs the magnetic particles immediately before the reagent is dispensed. After stirring, the magnetic particle stirring arm moves upward to above the reagent bottle 3, and then moves to an area above the cleaning mechanism 17 containing a cleaning fluid, and then moves downward into the cleaning fluid. Then, the magnetic particle stirring mechanism is rotated to remove the magnetic particles adhering to the stirring mechanism.

After the lapse of a predetermined length of reaction time from when the sample and the predetermined reagent are dispensed, a reaction liquid is formed. The reaction liquid is aspirated from the reaction container 14 through the reaction liquid aspiration nozzle 18, and further supplied to the detection mechanism 19. The detection mechanism 19 analyzes the reaction liquid.

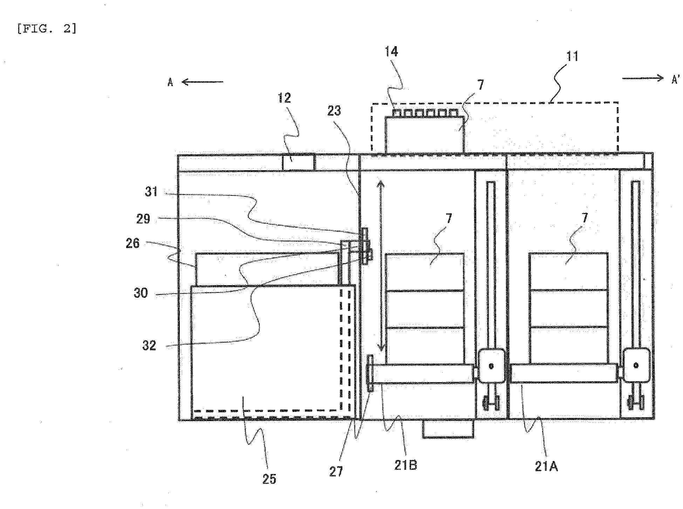

Then, the reaction container 14 holding the analyzed reaction liquid is moved to an area above the reaction container disposal opening 12 by the reaction container transfer mechanism 8, and the reaction container 14 is disposed of through the reaction container disposal opening 12 in a reaction container disposal unit 26 (Fig. 2 and the like).

The series of operations of the analyzer is controlled by a control unit 200.

The automatic analyzer is capable of analyzing a plurality of samples for a plurality of analysis items with efficiency by a combination or repetition of the above-described operations.

Also, the automatic analyzer is not limited to taking a form of a single analysis module configuration as illustrated in Fig. 1, and the automatic analyzer may be configured to connect two or more of analysis module (s) capable of measuring various same or different analysis items and/or pretreatment module(s) for conducting pretreatment through a convey apparatus(es) .

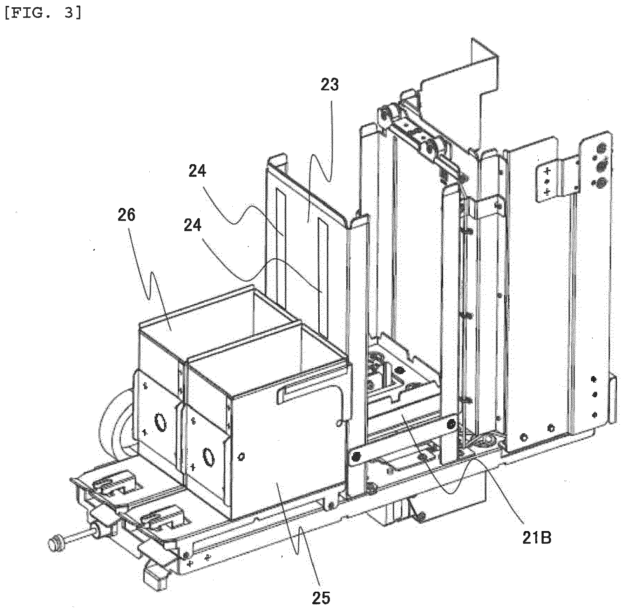

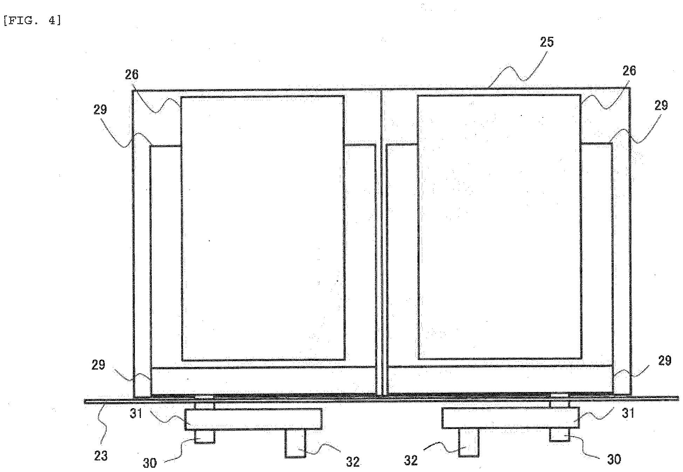

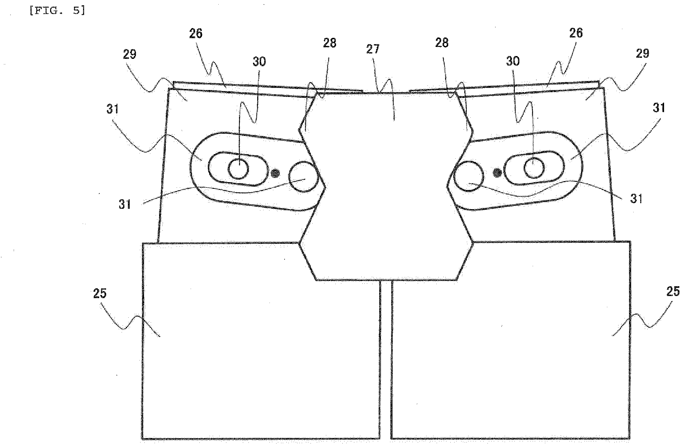

Subsequently, the configuration of the reaction container disposal unit 26. is described with reference to Fig. 2 to Fig. 5. Fig. 2 is a diagram schematically showing a cross section (part of Section A-A' in Fig. 1) including the reaction container disposal unit in the automatic analyzer according to the first embodiment. Fig. 3 is a diagram schematically showing the reaction container tray lifting mechanism and the reaction container disposal unit. Fig. 4 is a top view showing a structure of a coupling portion on the reaction container disposal unit side. Fig. 5 is a side view showing a structure of the coupling portion.

In the aforementioned automatic analyzer 1, upon initiating analysis and/or the like, one or more reaction container trays 7 loaded with unused reaction containers 14 are set in positions (reaction container standby portion 11) accessible by the reaction container transfer mechanism 8. In the automatic analyzer 1, when the unused reaction containers 14 loaded on a reaction container tray 7 have run out, the reaction container transfer mechanism 8 removes the used reaction container tray 7 from the reaction container standby portion 11 by the lifting operation of the reaction container tray lifting mechanism 21B, and a reaction container tray 7 loaded with new unused reaction containers 14 is transferred to the reaction container standby portion 11 by the lifting operation of the reaction container tray lifting mechanism 21A and a reaction container tray moving mechanism which is not shown.

When the number of used reaction container trays 7 loaded with no reaction container 14 reaches a certain number, the used reaction container trays 7 on the reaction container tray lifting mechanism 21B are removed from the drawer 21.

As illustrated in Fig. 2, the reaction container disposal unit 26 has an opening formed in an upper portion thereof, and is configured to be mountable on a reaction container disposal unit holding member 25 that is placed directly below the reaction container disposal opening 12 illustrated in Fig. 1.

As illustrated in Fig. 3, two reaction container disposal unit holding members 25 are arranged side by side, so that two reaction container disposal units 26 can be held within the analyzer. The reaction container disposal units 26 are placed adjacent to the reaction container tray lifting mechanism 21B across the wall 23. Two slits 24 are formed in the wall 23.

Here, if the reaction container transfer mechanism 8 disposes of the reaction containers 14 in the same place at all times, the reaction containers 14 will be stacked in a fixed place within the reaction container disposal unit 26.

To address this, in the embodiment, an L-shaped coupling member on disposal unit side 29 is arranged within each reaction container disposal unit holding member 25. In the coupling member on disposal unit side 29 is mounted with a protruding portion 30 protruding to be inserted into the slit 24 of the wall 23 as illustrated in Fig. 4. Further, the protruding portion 30 has a portion protruding across the wall 23 toward the reaction container tray lifting mechanism 21B side, and in the portion, a connection member 31 and a protruding portion 32 are placed.

Further, as illustrated in Fig. 2 and Fig. 5, the reaction container tray lifting mechanism 21B is mounted with a coupling member on lifting mechanism side 27 that has projection portions 28 each placed on the protruding portion 32 side and in a position interfering with the protruding portion 32 of the coupling member on disposal unit side 29. Stated another way, the protruding portion 32 protrudes on the operation path of the reaction container tray lifting mechanism 21B.

The coupling member on disposal unit side 29 is configured to be able to contact the coupling member on lifting mechanism side 27 of the reaction container tray lifting mechanism 21B, which corresponding to a coupling member that converts an operation of the reaction container tray lifting mechanism 21B into an exciting force exerted on the reaction container disposal unit 26.

Then, in the lifting operation of the reaction container tray lifting mechanism 21B for removing the used reaction container tray 7 from the reaction container standby portion 11, the projection portion 28 of the coupling member on lifting mechanism side 27 interferes with the protruding portion 32 as illustrated in Fig. 5, so that the protruding portion 32 is rocked vertically and laterally. Upon the protruding portion 32 being rocked vertically and laterally, the coupling member on disposal unit side 29 is also vibrated vertically and laterally via the protruding portion 32, the connection member 31 and the protruding portion 30 . That is, the coupling portion converts the lifting operation of the reaction container tray lifting mechanism 21B into the exciting force exerted on the reaction container disposal unit 26.

Since the reaction container disposal unit 26 is placed on the L-shaped coupling member on disposal unit side 29 as described above, upon vertical and lateral vibrations of the coupling member on disposal unit side 29, the reaction container disposal unit 26 also concurrently vibrates vertically and laterally. Because of this, even if the used reaction containers 14 are stacked unevenly in a certain place in the reaction container disposal unit 26, a pile of stacked used reaction containers 14 is deformed to be flat during the vibrations, so that the used reaction containers 14 become flat within the reaction container disposal unit 26.

Since the reaction container tray lifting mechanism 21B is driven by a dedicated motor, other than lifting up and down for collecting the used reaction container trays 7, the reaction container tray lifting mechanism 21B may be lifted up and down on a standalone basis for exciting the reaction container disposal unit 26. For the standalone operation, the reaction container tray lifting mechanism 21B is desirably lifted up and down without any effect on analysis.

Advantageous effects of the embodiment will now be described.

The aforementioned automatic analyzer 1 according to the first embodiment of the present invention includes: the plurality of reaction containers 14 each holding the reaction liquid; the reaction container tray lifting mechanism 21B that conveys the reaction container tray 7 holding the reaction containers 14 before use; and the reaction container disposal unit 26 to which the used reaction container 14 is to be disposed of. The reaction container disposal unit 26 has a coupling portion that is configured to be able to contact the reaction container tray lifting mechanism 21B and converts an operation of the reaction container tray lifting mechanism 21B into an exciting force exerted on the reaction container disposal unit 26.

Thus, even if the reaction containers 14 are unevenly stacked directly below the reaction container disposal opening 12, the stack unevenly piled in association with the operation of the reaction container tray lifting mechanism 21B may be flattened, so that unevenly stacking the reaction containers 14 may be more easily inhibited than conventional techniques. Also, by virtue of preventing uneven stacking in association with the operation of the reaction container tray lifting mechanism 21B, a required number of additional configurations is few, and the apparatus layout constraints may be minimized.

Further, the coupling portion includes the protruding portion 32 that protrudes on the operation path of the reaction container tray lifting mechanism 21B. This may easily achieve a structure facilitating conversion from the operation of the reaction container tray lifting mechanism 21B to the exciting force.

Also, the reaction container tray lifting mechanism 21B is placed adjacent to the reaction container disposal unit 26, and the coupling portion converts the lifting operation of the reaction container tray lifting mechanism 21B into the exciting force exerted on the reaction container disposal unit 26. Thereby, the structure of the coupling portion may be minimized in size.

### [Second Embodiment]

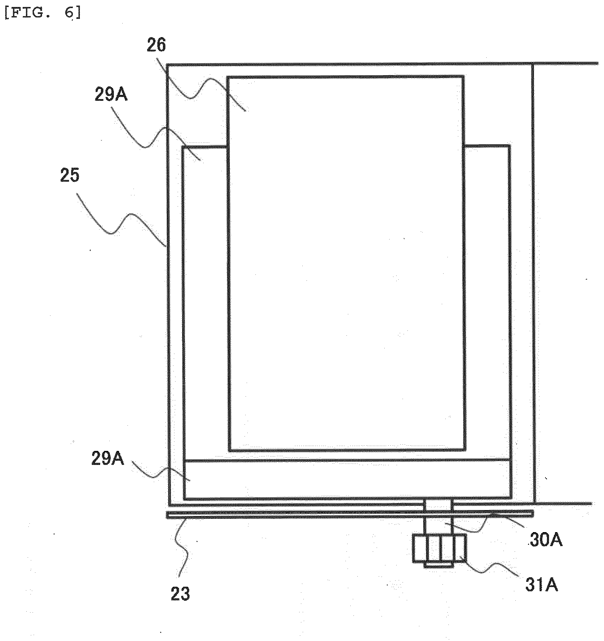

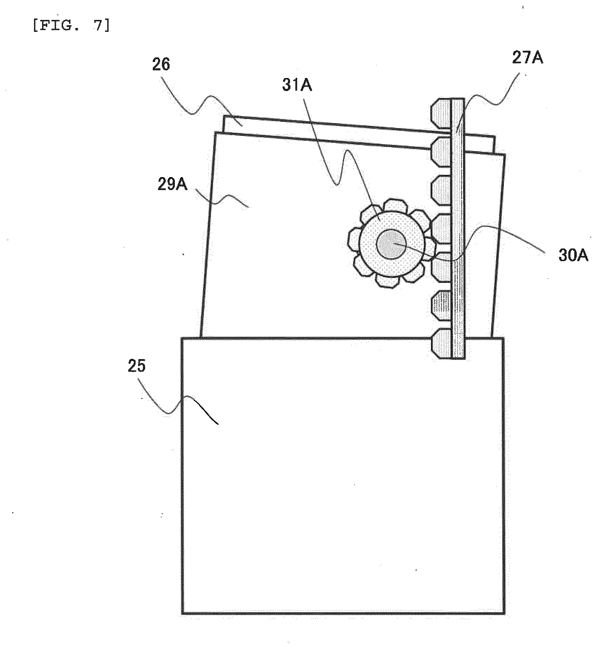

An automatic analyzer according to a second embodiment of the present invention will be described with reference to Fig. 6 and Fig. 7. Fig. 6 is a top view showing a structure of a coupling portion on the reaction container disposal unit side in the automatic analyzer according to the second embodiment. Fig. 7 is a side view showing the structure of the coupling portion.

The automatic analyzer according to the embodiment is identical in structure, operation with the first embodiment other than differs in the structure of the coupling portion from the first embodiment, and details thereof are omitted.

As illustrated in Fig. 6 and Fig. 7, a coupling member on disposal unit side 29A in the automatic analyzer according to the embodiment is arranged within the reaction container disposal unit holding member 25, but a protruding portion 30A is placed to protrude toward the slit 24. Further, a gear 31A is placed on a portion of the protruding portion 30A protruding across the wall 23 to the reaction container tray lifting mechanism 21B side.

Further, as illustrated in Fig. 7, the reaction container tray lifting mechanism 21B is attached with a coupling member on lifting mechanism side 27A in a position interfering with the gear 31A of the protruding portion 30A of the coupling member on disposal unit side 29A. Stated another way, the protruding portion 30A protrudes on the operation path of the reaction container tray lifting mechanism 21B.

Also, in the embodiment, in the lifting operation of the reaction container tray lifting mechanism 21B for removing the used reaction container tray 7 from the reaction container standby portion 11, the coupling member on lifting mechanism side 27A interferes with the gear 31A as illustrated in Fig. 7, so that the protruding portion 30A is rocked vertically and laterally via the gear 31A. By vertically and laterally rocking the protruding portion 30A, the coupling member on disposal unit side 29A also vibrates vertically and laterally, and concurrently the reaction container disposal unit 26 also vibrates vertically and laterally.

Because of this, even if the used reaction containers 14 are stacked unevenly in a certain place in the reaction container disposal unit 26, a pile of stacked used reaction containers 14 is deformed to be flat during the vibrations, so that the used reaction containers 14 become flat within the reaction container disposal unit 26.

Other configurations and operations are approximately the same as those of the automatic analyzer according to the first embodiment described above, and details are omitted.

In the automatic analyzer according to the second embodiment of the present invention, advantageous effects approximately similar to that in the automatic analyzer according to the first embodiment may be provided.

### [Others]

It is to be understood that the present invention is not limited to the above embodiments, and encompasses various modifications. The above embodiments have been described in detail for the purpose of providing a better understanding of the invention, and the present invention is not necessarily limited to including all the configurations described above.

Further, a part of the configuration of one embodiment can be substituted for a configuration of another embodiment, and a configuration of one embodiment can be added to a configuration of another embodiment. Further, for a portion of the configuration of each embodiment, addition, deletion and substitution of another configuration may be made.

### Reference Sign List

- 1:: automatic analyzer
- 2:: reagent disk
- 3:: reagent bottle
- 5:: sample conveying mechanism
- 6:: sample dispensing mechanism
- 7:: reaction container tray
- 8:: reaction container transfer mechanism
- 9:: incubator
- 10:: upper surface opening
- 11:: reaction container standby portion
- 12:: reaction container disposal opening
- 13:: reaction liquid stirring mechanism
- 14:: reaction container
- 15:: reagent dispensing pipette
- 16:: stirring mechanism
- 17:: cleaning mechanism
- 18:: reaction liquid aspiration nozzle
- 19:: detection mechanism
- 21A, 21B:: reaction container tray lifting mechanism
- 23:: wall
- 24:: slit
- 25:: reaction container disposal unit holding member
- 26:: reaction container disposal unit
- 27, 27A:: coupling member on lifting mechanism side (coupling portion)
- 28:: projection portion
- 29, 29A:: coupling member on disposal unit side (coupling portion)
- 30, 30A:: protruding portion (coupling portion, protruding portion)
- 31:: connection member (coupling portion)
- 31A:: gear (coupling portion)
- 32:: protruding portion (coupling portion, protruding portion)
- 100:: automatic analyzer
- 200:: control unit

## Claims

1. An automatic analyzer that measures a reaction liquid obtained by a sample reacting with a reagent, the automatic analyzer comprising:
a plurality of reaction containers each being configured to hold the reaction liquid;
a reaction container tray lifting mechanism configured to convey a reaction container tray that holds the reaction containers before use; and
a reaction container disposal unit to which the used reaction container is to be disposed of, wherein
the reaction container disposal unit includes a coupling portion configured to be in contact with the reaction container tray lifting mechanism and configured to convert an operation of the reaction container tray lifting mechanism into an exciting force exerted on the reaction container disposal unit.

2. The automatic analyzer according to claim 1, wherein
the coupling portion includes a protruding portion that protrudes above an operation path of the reaction container tray lifting mechanism.

3. The automatic analyzer according to claim 1, wherein
the reaction container tray lifting mechanism is provided adjacent to the reaction container disposal unit, and
the coupling portion is configured to convert a lifting operation of the reaction container tray lifting mechanism into the exciting force exerted on the reaction container disposal unit.
